# EUROPÄISCHE PATENTSCHRIFT

(11) **EP 0 353 794 B1**
(45) Veröffentlichungstag und Bekanntmachung des Hinweises auf die Patenterteilung: **11.08.1993**
(21) Anmeldenummer: 89201622.1
(22) Anmeldetag: 21.06.1989
(51) Int. Cl.: C01B 21/08, C06B 35/00

(54) **Verfahren und Vorrichtung zur Herstellung von feinkörnigem Bleiazid**
Process and apparatus for the preparation of fine-grained lead azide
Procédé et dispositif de prépararion d'azide de plomb sous forme de poudre très fine

(30) Priorität: 28.07.1988 CH 2882/88
(43) Veröffentlichungstag der Anmeldung: 07.02.1990
(73) Patentinhaber: Schweizerische Eidgenossenschaft vertreten durch die Eidg. Munitionsfabrik Thun der Gruppe für Rüstungsdienste, CH-3602 Thun (CH)
(72) Erfinder: Klossner, Botho, CH-3652 Hilterfingen (CH); Lörtscher, Paul, CH-3526 Brenzikofen (CH)
(74) Vertreter: Frauenknecht, Alois J.

(56) Entgegenhaltungen:
- FR-A- 532 610
- US-A- 3 264 150
- T. URBANSKI: "Chemistry and technology of explosives", Band 4, Seiten 482-484, Pergamon Press, Oxford, GB
- T. URBANSKI: "Chemistry and technology of explosives", Band 3, Seiten 178,179, Pergamon Press, Oxford, GB

## Beschreibung

Die Erfindung betrifft ein Verfahren zur Herstellung von feinkörnigem Bleiazid, bei welchem wässrige Lösungen von Natriumazid und Bleinitrat in einem Behälter bei konstanter Temperatur gerührt werden, und eine Vorrichtung zur Herstellung von feinkörnigem Bleiazid nach dem Verfahren.

Aus dem Buch "Chemistry and Technology of Explosives" Vol. 3, von T. Urbanski, Pergamon Press 1967, S. 178, 179, ist ein solches Herstellungsverfahren für Bleiazid bekannt. Es wird pro Charge Bleinitrat in einer 9-10%-igen wässrigen Lösung in ein offenes Reaktionsgefäss eingefüllt. Diese Lösung wird bei einer Temperatur von 50°C mit Natriumhydroxid neutralisiert, bis ein pH-Wert der Lösung von 4.0 aufgrund des Farbumschlages von Methylorange eingestellt ist. Eine geringe Menge Dextrin wird zugefügt, damit das Kristallwachstum des ausfällenden Bleiazids gestört wird. Dann wird Natriumazid in einer 2,7 bis 3,0 %-igen wässrigen Lösung hinzugefügt. Diese Lösung soll alkalisch zu Phenolphtalein als Indikator sein, was mit einer 1N-Lösung Schwefelsäure eingestellt wird. Bei zu niedriger Alkalinität soll eine berechnete Menge Natriumhydroxid hinzugefügt werden. Diese Mischung wird während einer Stunde bei einer gleichbleibenden Temperatur von 50°C gerührt. Danach wird der Rührer gestoppt, und es fällt Bleiazid aus der Mischung aus. Der Rührer wird nach oben entfernt und das Reaktionsgefäss seitlich gekippt, sodass das Bleiazid abgefiltert werden kann. Das Bleiazid wird dann mit Wasser ausgewaschen, getrocknet und gesiebt. Die Ausbeute des derart hergestellten Bleiazids beträgt 99%.

Das oben beschriebene Herstellungsverfahren für Bleiazid ist deshalb so aufwendig, da bekanntlich kristallförmiges Bleiazid schon beim Brechen der Kristallnadeln eine Explosion auslösen kann. Durch die notwendigen Zusätze wie Dextrin, Polyvinylalkohol oder dergleichen wird polymorphes Bleiazid gebildet. Dies hat den grossen Nachteil, dass die Schüttung und somit die Dosierung des Bleiazids bei der Herstellung von Munition erschwert ist. Zudem ist bei dem obigen Herstellungsverfahren die Kristallisation des Bleiazids nicht vollständig ausgeschlossen, so dass noch eine beträchtliche Menge an Kristallnadeln mit hoher Reib-, Schlag- und Temperaturempfindlichkeit vorhanden ist. Die unterschiedliche Korngrösse des derart hergestellten Bleiazids bewirkt ausserdem, dass die Rieselfähigkeit unbefriedigend bleibt. Ein anderer Nachteil des bekannten Verfahrens ist, dass die Reaktion erst nach einer Impfung des Lösungsgemisches erfolgt. Der Bleigehalt des Abwassers beträgt etwa 13 g/l, wodurch eine erhebliche Umweltbelastung entsteht.

Der Erfindung liegt nun die Aufgabe zugrunde, ein Verfahren und eine Vorrichtung zur Herstellung von feinkörnigem Bleiazid anzugeben, wobei das hergestellte Bleiazid als Granulat aus angenähert kugelförmigen Körnern entsteht, damit eine verbesserte Rieselfähigkeit und eine weniger empfindliche Handhabung des Bleiazids erreicht wird. Zudem soll eine Verringerung von bleihaltigem Abwasser erzielt werden.

Diese Aufgabe wird bei einem Verfahren zur Herstellung von feinkörnigem Bleiazid, bei welchem wässrige Lösungen von Natriumazid und Bleinitrat in einem Behälter bei konstanter Temperatur ständig gerührt werden, dadurch gelöst, dass
- in einem ersten Verfahrensschritt die wässrige Lösung von Bleinitrat und eine geringe Menge einer wässrigen Lösung von Natriumcitrat in den Behälter eingefüllt werden,
- in einem zweiten Verfahrensschritt während einer Zeitdauer von 30 bis 40 Minuten die wässrige Lösung von Natriumazid in den Behälter dosiert wird,
- die eingefüllten wässrigen Lösungen mit einer Rührgeschwindigkeit von 0,2 m/s bis 1,0 m/s gerührt werden, und
- die konstante Temperatur auf einen Wert von 50°C bis 80°C, vorzugsweise auf 70°C, eingestellt wird.

Die Vorrichtung zur Herstellung von feinkörnigem Bleiazid gemäss diesem Verfahren hat einen zylinderförmigen Behälter mit einem als Kugelkalotte ausgebildeten Behälterboden und einer Rührscheibe mit verschränkten Flügeln, wobei die Rührscheibe im unteren Drittel der eingefüllten wässrigen Lösungen positioniert ist. Dadurch werden Kristallansätze an der Behälterwand weitgehend verhindert.

Ein wesentlicher Vorteil der Erfindung ist, dass das Herstellungsverfahren bedeutend einfacher ist und die vorgesehenen Verfahrensschritte eine sehr regelmässige, feinkörnige Bleiazidkristallisation bewirken. Der pH-Wert des Gemisches braucht nicht eingestellt zu werden, da das zugefügte Natriumcitrat als schwacher Puffer wirkt. Zudem bildet das Citrat-Anion mit dem Blei-Kation eine schwach komplexe Verbindung, wodurch die Reaktion zwischen Blei und Azid verlangsamt wird. Insbesondere wird während 30 bis 40 Minuten, vorzugsweise 35 Minuten, die wässrige Lösung von Natriumazid dosiert zugeführt, damit eine unerwünschte Bildung von undefinierten Kristallagglomerationen verhindert wird. Da die Reaktion ohne Impfung abläuft, ist eine weitere Vereinfachung des Herstellungsverfahren gegeben. Der Bleigehalt des Abwassers ist wegen des höheren Verhältnisses von Azid zu Blei zudem erheblich geringer, als der des nach dem üblichen Verfahren hergestellten Bleiazids.

Ein Vorteil nach einer Ausgestaltung der Erfindung gemäss Anspruch 2 ist, dass nunmehr der Behälter nicht mehr gekippt werden muss, sondern das feinkörnige Bleiazid in Suspension über ein Auslaufventil im Behälterboden abgeführt werden kann. Dadurch ist eine wesentlich rationellere und schnellere Herstellung ermöglicht.

Mit Vorteil werden nach Anspruch 3 eine wässrige Lösung mit 5 - 7 Gew.-%, vorzugsweise 6 Gew.-%, Bleinitrat, eine wässrige Lösung mit 6 - 8 Gew.-%, vorzugsweise 7 Gew.-%, Natriumcitrat und eine wässrige Lösung mit 2 - 4 Gew.-%, vorzugsweise 3 Gew.-%, Natriumazid verwendet. Bei dieser Zusammensetzung hat sich nämlich gezeigt, dass der Bleigehalt im Abwasser nur noch etwa 30% desjenigen beträgt, wie er bei den gebräuchlichen Herstellungsverfahren anfällt.

In der Praxis hat sich nach Anspruch 4 eine Rührgeschwindigkeit von 0,5 m/s bis 0,7 m/s bewährt, da dann ein sehr homogenes Granulat aus angenähert kugelförmigen Bleiazid-Körnern entsteht.

In vorteilhafter Ausgestaltung der Vorrichtung zur Herstellung von feinkörnigem Bleiazid nach Anspruch 5 und 6 bilden verschränkte Flügel je einen Winkel von 5° bis 15°, vorzugsweise um 10°, mit der Horizontalen und sind im unteren Drittel der Lösung angebracht. Dadurch wird ferner verhindert, dass eine Kristallisation des Bleiazids auftreten kann. Gleichzeitig werden allfällige unerwünschte Agglomerate durch die hohe Rührgeschwindigkeit des Rührwerkes verhindert.

Die Einlaufdüsen zur Dosierung des Natriumazides gemäss Anspruch 7 sind besonders vorteilhaft im oberen Bereich des Behälters in einem Winkel von 60° bis 80° zur Horizontalen, vorzugsweise 70°, angeordnet, damit eine sehr gleichmässige und kontrollierbare Durchmischung stattfindet.

Das Auslaufventil ist nach Anspruch 8 vorteilhafterweise als ein auf einer Spindel auf- und abbewegbar angeordneter Ventilkegel ausgebildet, der in einem nach innen verjüngten Ventilsitz im Behälterboden eingepasst ist.

Weitere Vorteile ergeben sich aus der nachfolgenden Beschreibung. Dort wird die Erfindung anhand in den Zeichnungen dargestellten Beispielen näher erläutert.

Dabei zeigt:
- Fig. 1: schematisch einen Behälter mit einem Stabrührer und einem Auslaufventil und
- Fig. 2: eine Oberansicht der Rührscheibe.

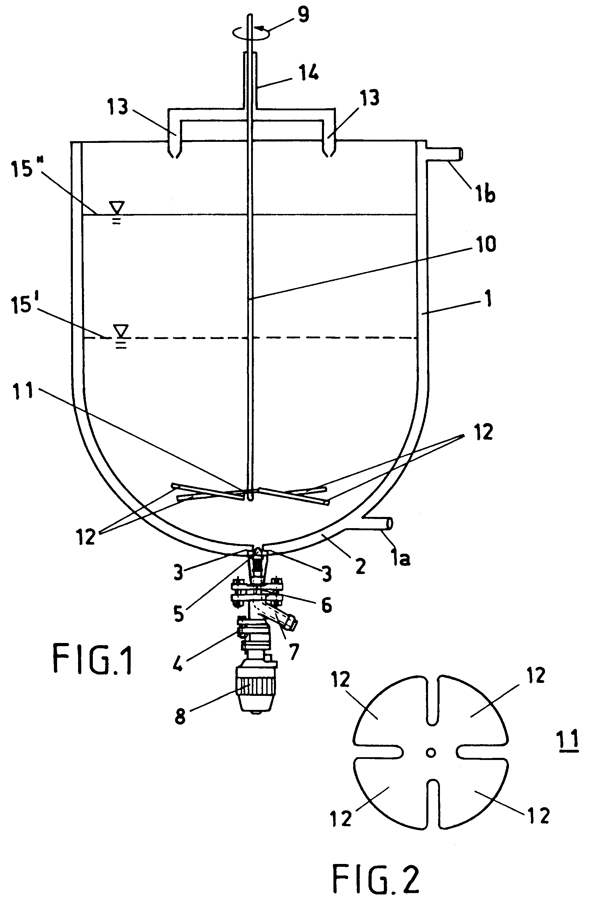

In Fig. 1 ist ein offener, zylindrischer, doppelwandiger Behälter 1 mit einem Durchmesser von 50 cm dargestellt, wobei unten ein Einlaufstutzen 1a und oben ein Auslaufstutzen 1b für die Wassertemperierung vorgesehen sind. Der Behälterboden 2 bildet eine Kugelkalotte. Zentral im Behälterboden 2 ist eine nach innen verjüngte Öffnung, ein Ventilsitz 3, angeordnet. Dort ist unterhalb des Behälterbodens 2 ein Auslaufventil 4 angeschweisst, das im wesentlichen aus einem Ventilkegel 5 mit einer Spindel 6 besteht, und mit einem seitlich nach unten zeigenden Auslaufstutzen 7 versehen ist. Die Spindel 6 besitzt ein Gewinde und ist mit einem Drehknopf 8 in dem Gehäuse des Auslaufventils 4 auf- und abbewegbar. Bei geschlossenem Auslaufventil 4 dichtet der Ventilkegel 5 den Ventilsitz 3 druckfest ab.

Im Behälter 1 ist zentral ein Stabrührer 9 vorgesehen, der aus einem - hier nicht dargestellten - Antriebsmotor, einer Rührachse 10 und einer Rührscheibe 11 besteht. Die Rührachse 10 und die Rührscheibe 11 sind aus einem rostfreien Stahl hergestellt. Die Rührscheibe 11 besitzt vier verschränkte Flügel 12, die je einen Winkel von 9° mit der Horizontalen bilden. Die Flügel 12 sind sektorförmig ausgebildet (Fig. 2). Die Rührscheibe 11 hat einen Durchmesser von 16 cm und befindet sich etwa 6 cm über dem Behälterboden 2. Im oberen Bereich des Behälters 1 sind gabelförmig um die Rührachse 10 zwei Einlaufdüsen 13 angeordnet, die gemeinsam auf einem T-förmigen Einlaufrohr 14 befestigt sind. Die Einlaufdüsen 13 haben eine Austrittsöffnung mit einem Durchmesser von 3 mm und zeigen nach unten in einem Winkel von 64° aus der t-förmigen Ebene des Einlaufrohres betrachtet. Das Einlaufrohr 14 und die Einlaufdüsen 13 sind aus PVC gefertigt.

In dem oben beschriebenen Behälter 1 wird nun das Verfahren zur Herstellung von feinkörnigem, feinverteiltem Bleiazid wie folgt durchgeführt:
Zunächst wird das Auslaufventil 4 geschlossen und eine wässrige Bleinitratlösung mit einem pH-Wert von 3,8 bis 4,0 und eine wässrige Natriumcitratlösung in den Behälter 1 auf einen Flüssigkeitsstand 15′ eingefüllt. Es werden 10,5 Liter einer Lösung mit 6,0 Gew.-% Bleinitrat und 0,03 Liter einer Lösung mit 6,75 Gew.-% Natriumcitrat verwendet. Die periphere Rührgeschwindigkeit der Rührscheibe 11 wird dabei auf 0,2 bis 1,0 m/s, vorzugsweise auf 0,5 bis 0,7 m/s, eingestellt. Die periphere Rührgeschwindigkeit ist als die lineare Geschwindigkeit am Rand der Rührscheibe 11 definiert und wird gebildet aus dem Produkt von Radius und Winkelgeschwindigkeit der Rührscheibe 11. Eine konstante periphere Rührgeschwindigkeit gewährleistet bei geänderten Grössen des Behälters 1, dass die Turbulenz des Lösungsgemisches an der Wandung des Behälters 1 gleichbleibt.

Sodann wird eine wässrige Natriumazidlösung über das T-förmige Einlaufrohr 14 und die Einlaufdüsen 13 in das umrührte Lösungsgemisch dosiert eingeleitet. Die Lösung enthält 3,0 Gew.-% Natriumazid und wird während etwa 33 Minuten dosiert, d.h. bis 7,5 Liter in das Lösungsgemisch eingeleitet sind und der Flüssigkeitsstand die Position 15'' (Fig. 1) erreicht hat. Mit der Temperatur und der Rührgeschwindigkeit des Lösungsgemisches kann die Form der sich bildenden Agglomerationen gesteuert werden. Insbesondere werden bei einer Rührgeschwindigkeit unter 0,5 m/s unregelmässige, kristalline Agglomerationen gebildet. Bei einer Rührgeschwindigkeit über 0,7 m/s werden kugelförmige Agglomerationen mit einem hohen Anteil an kleinen Bleiazid-Kristallen gebildet. Die Temperatur des Behälters 1, und damit des Lösungsgemisches, wird während des gesamten Mischvorganges auf einen Wert zwischen 50°C und 80°C, vorzugsweise auf 70°C, eingestellt. Bei einer Temperatur unterhalb 60°C bilden sich stabförmige Agglomerationen. Durch die Temperaturwahl kann die Form der Agglomerationen beeinflusst werden. Wegen der Pufferwirkung des Natriumcitrates ist eine Überprüfung des pH-Wertes nicht erforderlich.

Das kristallinische Reaktionsprodukt, d.h. die Bleiazidkörner, wird durch die ständige, schnelle Durchmischung sehr homogen im gesamten Behälter 1 verteilt. Somit werden gleichmässig verteilte, kugelförmige Bleiazidkörner erhalten, ohne die sonstigen Kristallansätze an der Behälterwandung, und es wird eine hohe Ausbeute, d.h. etwa 91,3 %, erreicht. Die derart hergestellten Bleiazidkörner haben einen Durchmesser von 100 µm bis 200 µm, vorzugsweise etwa 150 µm. Der Bleigehalt des Abwasser beträgt etwa 66,8 Gramm in 18 Litern, oder 3,7 g/l, was etwa 30 % desjenigen nach den herkömmlichen Verfahren bedeutet.

Nach Ablauf der Mischzeit ist die Zufuhr der Natriumazidlösung abgeschlossen, während jedoch die Rührscheibe 7 noch weiterläuft. Der Behälter 1 und das darin befindliche Lösungsgemisch werden auf 35°C bis 25°C, vorzugsweise etwa auf 30°C, abgekühlt und das Lösungsgemisch wird über das Auslaufventil 4 dem Behälter 1 entnommen.

Die Bleiazidkörner werden mittels eines Filters entwässert und mit Wasser gewaschen. Unter Vakuum und bei einer Temperatur von 50°C werden sie dann getrocknet. Mittels eines Siebes werden sie noch im Hinblick auf die spätere Verwendung gelockert.

## Patentansprüche

1. Verfahren zur Herstellung von feinkörnigem Bleiazid, bei welchem wässrige Lösungen von Bleinitrat und Natriumazid in einem Behälter bei konstanter Temperatur gerührt werden, dadurch gekennzeichnet, dass
- in einem ersten Verfahrensschritt die wässrige Lösung von Bleinitrat und eine geringe Menge einer wässrigen Lösung von Natriumcitrat in den Behälter (1) eingefüllt werden,
- in einem zweiten Verfahrensschritt während einer Zeitdauer von 30 bis 40 Minuten die wässrige Lösung von Natriumazid in den Behälter (1) dosiert wird,
- die eingefüllten wässrigen Lösungen mit einer peripheren Rührgeschwindigkeit von 0,2 m/s bis 1,0 m/s gerührt werden, und
- die konstante Temperatur auf einen Wert von 50°C bis 80°C eingestellt wird.

2. Verfahren zur Herstellung von Bleiazid nach Anspruch 1, dadurch gekennzeichnet, dass nach Ablauf der Zeitdauer die eingefüllten wässrigen Lösungen weiter gerührt werden und der Behälter (1) auf eine Temperatur zwischen 25°C und 35°C abgekühlt wird, wobei das feinkörnige Bleiazid in Suspension aus dem Behälter (1) durch ein im Behälterboden angebrachtes Auslaufventil (4) ausläuft.

3. Verfahren nach einem der Ansprüche 1 oder 2, dadurch gekennzeichnet, dass eine wässrige Lösung mit 5 - 7 Gew.-% Bleinitrat, eine wässrige Lösung mit 2 - 4 Gew.-% Natriumazid und eine wässrige Lösung mit 6 - 8 Gew.-% Natriumcitrat verwendet werden.

4. Verfahren nach einem der Ansprüche 1 bis 3, dadurch gekennzeichnet, dass die wässrigen Lösungen mit einer peripheren Rührgeschwindigkeit von 0,5 m/s bis 0,7 m/s gerührt werden.

5. Verfahren nach einem der Ansprüche 1 bis 4, dadurch gekennzeichnet, dass dieses in einem zylinderförmigen Behälter (1), mit einem als Kugelkalotte ausgebildeten Behälterboden (2) ausgeführt wird, wobei eine Rührscheibe (11) mit verschränkten Flügeln (12) vorgesehen ist, welche im unteren Drittel der eingefüllten wässrigen Lösungen positioniert ist.

6. Verfahrens nach Anspruch 5, dadurch gekennzeichnet, dass die verschränkten Flügel (12) der Rührscheibe (11) je einen Winkel mit der Horizontalen von 5° bis 15° bilden.

7. Verfahrens nach Anspruch 5, dadurch gekennzeichnet, dass zur dosierten Einführung des Natriumazids zwei Einlaufdüsen (13) im oberen Bereich des Behälters (1) angeordnet sind, welche einen spitzen Winkel zur Horizontalebene bilden.

8. Verfahrens nach Anspruch 5, dadurch gekennzeichnet, dass ein Auslaufventil (4) an einer Öffnung zentral im Behälterboden (2) mit einem nach innen verjüngten Ventilsitz (3) vorgesehen ist und in welchem Ventilsitz (3) ein Ventilkegel (5) mittels einer Spindel (6) auf- und abbewegbar ist.

## Claims

1. A process for the preparation of fine-grained lead azide, during which aqueous solutions of lead nitrate and sodium azide are agitated in a container at a constant temperature, characterised in that,
- in a first step of the process, the aqueous solution of lead nitrate and a small quantity of an aqueous solution of sodium citrate are poured into the container (1),
- in a second step of the process, the aqueous solution of sodium azide is introduced in doses into the container (1) over a period of 30 to 40 minutes,
- the aqueous solutions in the container are agitated at a peripheral agitating speed of 0.2 m/s to 1.0 m/s, and
- the constant temperature is adjusted to a value of 50°C to 80°C.

2. A process for the preparation of lead aside according to Claim 1, characterised in that, at the end of the period, the aqueous solutions in the container are agitated further and the container (1) is cooled to a temperature of between 25°C and 35°C, the suspended fine-grained lead azide running out of the container (1) through an outlet valve (4) mounted in the container base.

3. A process according to either of Claims 1 or 2, characterised in that an aqueous solution with 5 - 7 % by weight lead nitrate, an aqueous solution with 2 - 4 % by weight sodium aside and an aqueous solution with 6 - 8 % by weight sodium citrate are used.

4. A process according to any one of Claims 1 to 3, characterised in that the aqueous solutions are agitated at a peripheral agitating speed of 0.5 m/s to 0.7 m/s.

5. A process according to any one of Claims 1 to 4, characterised in that it is carried out in a cylindrical container (1), whose base (2) is formed as a spherical segment, an agitating disc (11) with twisted blades (12) being provided, which is positioned in the lower third of the aqueous solutions in the container.

6. A process according to Claim 5, characterised in that the twisted blades (12) of the agitating disc (11) each form an angle of 5° to 15° to the horizontal.

7. A process according to Claim 5, characterised in that, in order to introduce the sodium azide in doses, two inlet nozzles (13) are arranged in the upper region of the container (1), which form an acute angle to the horizontal.

8. A process according to Claim 5, characterised in that an outlet valve (4) arranged at an opening at the centre of the container base (2) is provided with a valve seat (3), which is tapered inwards and in which a valve cone (5) can be moved upwards and downwards by means of a spindle (6).

## Revendications

1. Procédé de préparation d'azide de plomb à grains fins d'après lequel des solutions aqueuses d'azide de sodium et de nitrate de plomb sont agitées dans un récipient à température constante, **caractérisé en ce** que
- dans une première étape, la solution aqueuse de nitrate de plomb et une faible quantité d'une solution aqueuse de citrate de sodium sont introduites dans le récipient (1),
- dans une seconde étape, la solution aqueuse d'azide de sodium est introduite de manière dosée dans le récipient (1) pendant une durée de 30 à 40 minutes,
- les solutions aqueuses introduites sont agitées à une vitesse d'agitation de 0,2 m/s à 1,0 m/s, et
- la température constante est réglée sur une valeur de 50°C à 80°C.

2. Procédé de préparation d'azide de plomb selon la revendication 1, caractérisé en ce que, après l'écoulement du temps prévu, les solutions aqueuses introduites continuent à être agitées et que le récipient (1) est refroidi à une température comprise entre 25°C et 35°C, l'azide de plomb en suspension s'écoulant du récipient (1) par une vanne d'écoulement (4) ménagée dans le fond du récipient.

3. Procédé selon l'une des revendications 1 ou 2, caractérisé en ce qu'il met en oeuvre une solution aqueuse avec 5 à 7 % en poids de nitrate de plomb, une solution aqueuse avec 2 à 4 % en poids d'azide de sodium et une solution aqueuse avec 6 à 8 % en poids de citrate de sodium.

4. Procédé selon l'une des revendications 1 à 3, caractérisé en ce que les solutions aqueuses sont agitées à une vitesse d'agitation périphérique de 0,5 m/s à 0,7 m/s.

5. Procédé selon l'une des revendications 1 à 4, caractérisé en ce qu'il est réalisé dans un récipient (1) de forme cylindrique avec un fond (2) de récipient conformé en calotte sphérique, et qu'il prévoit un disque agitateur (11) avec des palettes entrecroisées (12) lesquelles sont positionnées dans le tiers inférieur des solutions aqueuses introduites.

6. Procédé selon la revendication 5, caractérisé en ce que les palettes (12) entrecroisées du disque agitateur (11) forment respectivement avec l'horizontale un angle de 5° à 15°.

7. Procédé selon la revendication 5, caractérisé en ce que pour l'introduction dosée de l'azide de sodium, deux buses d'entrée (13) sont disposées dans la partie supérieure du récipient (1) et forment avec l'horizontale un angle aigu.

8. Procédé selon la revendication 5, caractérisé en ce qu'une vanne d'écoulement (4) avec un siège de soupape (3) effilé vers l'intérieur est prévue sur un orifice central ménagé dans le fond (2) du récipient et que dans ledit siège de soupape (3), un cône de soupape (5) peut être déplacé vers le haut et vers le bas au moyen d'une broche (6).
